# EUROPÄISCHE PATENTSCHRIFT

(11) **EP 1 681 513 B1**
(45) Veröffentlichungstag und Bekanntmachung des Hinweises auf die Patenterteilung: **08.05.2013**
(21) Anmeldenummer: 05024851.7
(22) Anmeldetag: 14.11.2005
(51) Int. Cl.: F23N 1/02

(54) **Verfahren zum Beenden des Heizbetriebs eines Fahrzeugheizgerätes**
Method to stop the heating phase of a vehicle heater
Méthode pour mettre fin à la phase de chauffage d'un appareil de chauffage pour véhicule

(30) Priorität: 14.01.2005 DE 102005001908
(43) Veröffentlichungstag der Anmeldung: 19.07.2006
(73) Patentinhaber: Eberspächer Climate Control Systems GmbH & Co. KG., 73730 Esslingen (DE)
(72) Erfinder: Pfister, Wolfgang, 73732 Esslingen (DE); Köberle, Christoph, 70736 Fellbach (DE); Keefer, Jörg, 71384 Weinstadt (DE); Peschke, Jürgen, 73776 Altbach (DE)
(74) Vertreter: Ruttensperger, Bernhard

(56) Entgegenhaltungen:
- DE-A1- 19 524 422
- JP-A- 1 019 218
- US-A- 4 395 224
- US-A- 5 617 995

## Beschreibung

Die vorliegende Erfindung betrifft ein Verfahren zum Beenden des Heizbetriebs eines Fahrzeugheizgerätes, welches Fahrzeugheizgerät eine Brennkammer, eine Brennstoffzuführanordnung zum Zuführen einer einstellbaren Brennstoffzuführmenge zu der Brennkammer, eine Verbrennungsluftzuführanordnung zum Zuführen einer einstellbaren Verbrennungsluftzuführmenge zu der Brennkammer sowie eine Heizanordnung zum wenigstens lokalen Erwärmen der Brennkammer aufweist.

Das US-Patent 5,617,995 beschreibt ein Verfahren zum Beenden des Heizbetriebes eines Fahrzeugheizgerätes, wobei in einer ersten Abschaltphase die Zufuhr von Brennstoff und Verbrennungsluft derart erfolgt, dass die Heizleistung des Fahrzeugheizgerätes in dieser ersten Abschaltphase auf einen minimalen Wert verringert wird. Zum Ende der ersten Abschaltphase wird die Brennstoffzufuhr eingestellt. In einer darauf folgenden zweiten Abschaltphase bleibt die Verbrennungsluftzufuhr zunächst konstant auf dem Wert der ersten Abschaltphase, kann dann nach einer gewissen Zeitdauer auf einen minimalen Wert gesenkt werden, wird dann aber wieder auf einen maximalen Wert erhöht.

Aus der nachveröffentlichten DE 103 33 116 A1 ist ein Verfahren zum Beenden des Heizbetriebs eines Fahrzeugheizgerätes bekannt, bei dem in einer ersten Abschaltphase nach Erzeugung eines Abschaltbefehls bei verringerter Heizleistung des Heizgeräts, also verminderter Brennstoffzufuhr und auch verminderter Verbrennungsluftzufuhr, gleichzeitig auch eine elektrisch erregbare Heizanordnung betrieben wird. Durch Erregung dieser Heizanordnung wird zusätzlich zu der durch die noch ablaufende Verbrennung bereitgestellten Verbrennungswärme Wärme bereitgestellt, die die Abdampfung des noch vorhandenen flüssigen Brennstoffs vor dem vollständigen Abschalten des Heizgerätes unterstützen soll. Es ist festgestellt worden, dass bei einer derartigen Abschaltprozedur mit verminderter Heizleistung des Fahrzeugheizgerätes, also geringerer durch Verbrennung bereitgestellter Wärmeenergie, die noch ablaufende Verbrennung verstärkt auf denjenigen Bereich konzentriert ist, in welchem der zunächst flüssige Brennstoff zugeführt wird. Dies kann insbesondere ein Bereich sein, in welchem ein zumindest einen Teil der Heizanordnung bereitstellendes Zündorgan vorgesehen ist. Das Konzentrieren der Verbrennung auf diesen lokalen Bereich einer Brennkammer kann zur Folge haben, dass dort im Vergleich zu einer gleichmäßigeren Verbrennungsverteilung eine Erhöhung der Temperatur auftritt. Wird in dieser Phase zusätzlich auch noch die Heizanordnung betrieben, also beispielsweise elektrisch erregt, so wird in diesem Bereich zusätzlich noch Wärmeenergie bereitgestellt, so dass ein Zustand auftreten kann, bei dem der Siedepunkt des zunächst flüssig zugeführten Brennstoffs überschritten wird. Die Folge davon ist eine verstärkte Bildung von Ablagerung in diesem Bereich. Derartige Ablagerungen können über die Betriebslebensdauer eines Fahrzeugheizgerätes zu Zündproblemen führen und müssen beispielsweise durch mechanisches Reinigen oder durch Teileaustausch beseitigt werden.

Es ist die Aufgabe der vorliegenden Erfindung, ein Verfahren zum Beenden des Heizbetriebs eines Fahrzeugheizgerätes bereitzustellen, mit welchem die Gefahr der Entstehung von Ablagerungen vermindert werden kann.

Erfindungsgemäß wird diese Aufgabe gelöst durch ein Verfahren zum Beenden des Heizbetriebs eines Fahrzeugheizgerätes, welches Fahrzeugheizgerät eine Brennkammer, eine Brennstoffzuführanordnung zum Zuführen einer einstellbaren Brennstoffzuführmenge zu der Brennkammer, eine Verbrennungsluftzuführanordnung zum Zuführen einer einstellbaren Verbrennungsluftzuführmenge zu der Brennkammer sowie eine Heizanordnung zum wenigstens lokalen Erwärmen der Brennkammer aufweist, wobei das Verfahren die folgenden Maßnahmen umfasst:
- Erzeugen eines Abschaltbefehls,
- in einer ersten Abschaltphase nach Erzeugung des Abschaltbefehls, Zuführen von Brennstoff zu der Brennkammer und Betreiben der Verbrennungsluftzuführanordnung derart, dass die Heizleistung des Fahrzeugheizgerätes in der ersten Abschaltphase im Vergleich zu einer maximalen Heizleistung des Fahrzeugheizgerätes verringert ist,
- Nicht-Betreiben der Heizanordnung in der ersten Abschaltphase, wobei das Fahrzeugheizgerät in der ersten Abschaltphase mit einer Heizleistung betrieben wird, die im Bereich der minimalen Heizleistung des Fahrzeugheizgerätes liegt. Es sei hier darauf hingewiesen, dass, sofern von einer minimalen Heizleistung bzw. einer maximalen Heizleistung des Fahrzeugheizgerätes gesprochen wird, dies jeweils diejenigen Betriebszustände eines derartigen Fahrzeugheizgerätes anspricht, die unter Berücksichtigung der verschiedenen Systemkomponenten eines derartigen Gerätes, insbesondere der Verbrennungsluftzuführanordnung und der Brennstoffzuführanordnung, ansteuerungstechnisch einstellbar sind, um die durch Verbrennung generierte Wärmemenge so gering als möglich zu halten bzw. so groß wie möglich zu halten, wobei selbstverständlich auch die maximale thermische Belastbarkeit zu berücksichtigen ist. Die Heizleistung eines derartigen Fahrzeugheizgerätes kann also insbesondere auch begrenzt sein durch in einem Ansteuergerät abgelegte Grenzen für die Förderleistung der Brennstoffzuführanordnung bzw. der Verbrennungsluftzuführanordnung.

>

Am Ende der ersten Abschaltphase wird weiterhin die Zufuhr von Brennstoff zur Brennkammer beendet, wobei zum "Ausspülen" der Brennkammer bzw. des Fahrzeugheizgerätes weiter vorgesehen ist, dass in einer an die erste Abschaltphase anschließenden zweiten Abschaltphase die Verbrennungsluftzuführanordnung zum Zuführen von Verbrennungsluft zu der Brennkammer derart betrieben wird, dass mit Beginn der zweiten Abschaltphase die zugeführte Verbrennungsluftmenge kontinuierlich oder stufenartig verringert wird und eine minimale Verbrennungsluftmenge nicht unterschritten wird, wobei in dieser zweiten Abschaltphase die Heizanordnung nicht betrieben wird.

Der Erfindung liegt die Erkenntnis zu Grunde, dass durch das Verringern der Heizleistung des Fahrzeugheizgerätes, also das Verringern der durch die ablaufende Verbrennung bereitgestellten Wärmeenergie, und die dabei insbesondere im Bereich der Brennstoffeinspeisung im Allgemeinen auch entstehende Temperaturerhöhung bereits ausreichend Wärme bereitgestellt wird, um den noch vorhandenen bzw. in verminderter Menge eingespeisten Brennstoff zu verdampfen. Da die Heizanordnung erfindungsgemäß in dieser Phase bzw. beim Beenden des Heizbetriebs eines Fahrzeugheizgerätes nicht in Betrieb gesetzt wird, wird einerseits Energie eingespart, andererseits wird die Gefahr einer Temperaturüberhöhung in einem lokal sehr begrenzten Bereich, nämlich dem Bereich, in dem der Brennstoff eingespeist wird bzw. bei deutlich verringerter Heizleistung des Fahrzeugheizgerätes die Verbrennung verstärkt ablaufen wird, verringert. Dies vermeidet die vorangehend angesprochenen Probleme der Ablagerungsbildung und führt zu einem um 20% bis 40% verringerten Schadstoffausstoß im Abschaltvorgang und insbesondere zu einer deutlich verringerten CO-Emission.

Beispielsweise kann vorgesehen sein, dass in der ersten Abschaltphase die Brennstoffzufuhr mit einer Brennstoffzuführmenge im Bereich einer minimalen Brennstoffzuführmenge erfolgt.

Die vorliegende Erfindung wird nachfolgend mit Bezug auf die beiliegenden Zeichnungen detailliert beschrieben. Es zeigt:
- Fig. 1: eine Prinzipdarstellung eines Fahrzeugheizgerätes;
- Fig. 2: in den Diagrammen a), b) und c) die Betriebszustände einer Brennstoffzuführanordnung, einer Heizanordnung und einer Verbrennungsluftzuführanordnung beim Beenden des Betriebs eines Fahrzeugheizgerätes.

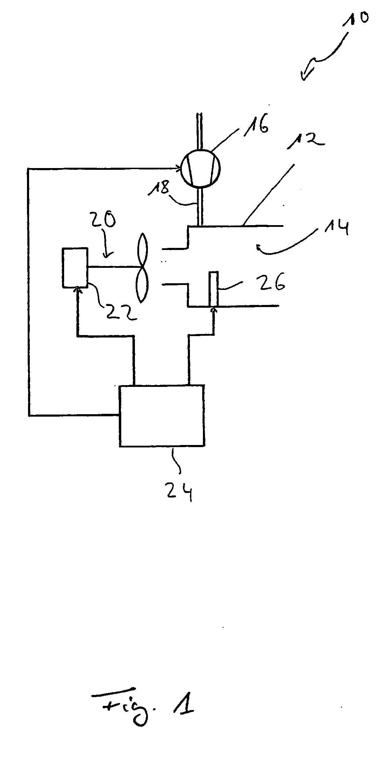

In Fig. 1 ist ein Fahrzeugheizgerät 10 in prinzipieller Art und Weise dargestellt. Das Fahrzeugheizgerät 10 umfasst ein Brennkammergehäuse 12, in welchem eine Brennkammer 14 gebildet ist. Durch eine Brennstoffförderanordnung 16, beispielsweise eine Dosierpumpe, wird über eine Brennstoffleitung 18 flüssiger Brennstoff, also beispielsweise Diesel oder Benzin, in die Brennkammer 14 eingeleitet. Ist das Heizgerät 10 nach Art eines Verdampferbrenners aufgebaut, kann im Bereich der Brennkammer 14, beispielsweise an einer Bodenwandung oder einer Umfangswandung derselben, ein poröses Verdampfermedium vorgesehen sein, in welches der flüssige Brennstoff eingeleitet wird. In dem porösen Verdampfermedium verteilt sich der flüssige Brennstoff durch Kapillarförderwirkung, und an der zur Brennkammer 14 frei liegenden Oberseite des Verdampfermediums tritt dann Brennstoffdampf in Richtung Brennkammer 14 aus.

Durch eine Heizluftförderanordnung 20, also beispielsweise ein Seitenkanalgebläse, deren Antrieb 22 ebenso wie die Brennstoffförderanordnung 22 unter der Ansteuerung eines Ansteuergeräts 24 steht, kann Verbrennungsluft in die Brennkammer 14 eingeleitet werden, um nach Durchmischung derselben mit dem darin auch enthaltenen Brennstoffdampf, ein verbrennungsfähiges bzw. zündfähiges Gemisch bereitzustellen.

Eine in der Fig. 1 allgemein mit 26 bezeichnete Heizanordnung dient dazu, in der Brennkammer 14 lokal hohe Temperaturen zu erzeugen. Beispielsweise kann die Heizanordnung 26 einen Glühzündstift umfassen, der mit einem zum Erzeugen hoher Temperaturen aktiven Bereich in die Brennkammer 14 ragt oder in einem mit der Brennkammer 14 in Verbindung stehenden Volumenbereich angeordnet ist. Bei Erregung eines derartigen Glühzündtstifts wird das in dessen Umgebung sich befindende Gemisch aus Verbrennungsluft und Brennstoffdampf so stark erhitzt, dass es zündet und die Verbrennung startet. Die Heizanordnung 26 kann aber insbesondere dann, wenn in der Brennkammer 14 das bereits angesprochene poröse Verdampfermedium vorgesehen ist, in Zuordnung zu diesem Verdampfermedium auch eine Heizeinrichtung, beispielsweise in Form einer Heizwendel o.dgl., umfassen, die zur verstärkten Brennstoffabdampfung das poröse Verdampfermedium erwärmen kann. Auch diese Heizeinrichtung kann selbstverständlich gemäß der Ansteuervorgabe durch das Ansteuergerät 24 in bzw. außer Betrieb gesetzt werden.

Der Verbrennungsbetrieb eines derartigen Fahrzeugheizgerätes wird beispielsweise dadurch gestartet, dass nach einer Vorglühphase eines Glühzündstifts der Heizanordnung 26 Brennstoff eingespeist wird, der dann in Dampfform in die Brennkammer 14 abgegeben wird und nach Durchmsichung mit der Verbrennungsluft das zündfähige Gemisch bereitstellt. Da in dieser Phase der Glühzündstift bereits die ausreichende Temperatur aufweist, wird in dessen lokalen Bereich die Zündung auftreten und sich dann über die Brennkammer 14 hin ausbreiten. Vor allem in dieser Phase kann die vorangehend angesprochene zusätzliche Heizeinrichtung zusätzlich betrieben werden, um möglichst schnell die Heizleistung des Fahrzeugheizgerätes 10 in Richtung zu einer Sollleistung zu bringen. Nach erfolgter Zündung und ausreichender Flammstabilisierung können dann die Heizeinrichtung und der Zündstift, also im Allgemeinen die Heizanordnung 26, deaktiviert werden, da bei ablaufender Verbrennung die die Brennstoffabdampfung unterstützende Wärme aus der Verbrennung selbst bereitgestellt wird. Im normalen Verbrennungsbetrieb kann dann die Heizleistung des Fahrzeugheizgerätes 10 vor allem durch Veränderung der pro Zeiteinheit eingespeisten Brennstoffmenge und ggf. auch der eingespeisten Luftmenge variiert werden. Hier ist ein gewisser Variationsbereich zwischen einer maximalen Heizleistung und einer minimalen Heizleistung möglich. Die maximale Heizleistung ist dabei vor allem begrenzt durch das Fördervermögen der Brennstoffzuführanordnung 16 und insbesondere auch die thermische Belastbarkeit derjenigen Systembereiche, in welchen bei der Verbrennung hohe Temperaturen entstehen. Die minimale Heizleistung ist im Allgemeinen dadurch bestimmt, dass Brennstoff zumindest in einer solchen Menge zugeführt werden muss, dass eine stabile Verbrennung gewährleistet werden kann. Hier können im Ansteuergerät 24 verschiedene Grenzwerte beispielsweise für die Ansteuerung der Brennstoffzuführanordnung 16 vorgesehen sein, welche den Variationsbereich der Brennstoffzufuhr und somit auch den Variationsbereich der Heizleistung des Fahrzeugheizgerätes begrenzen.

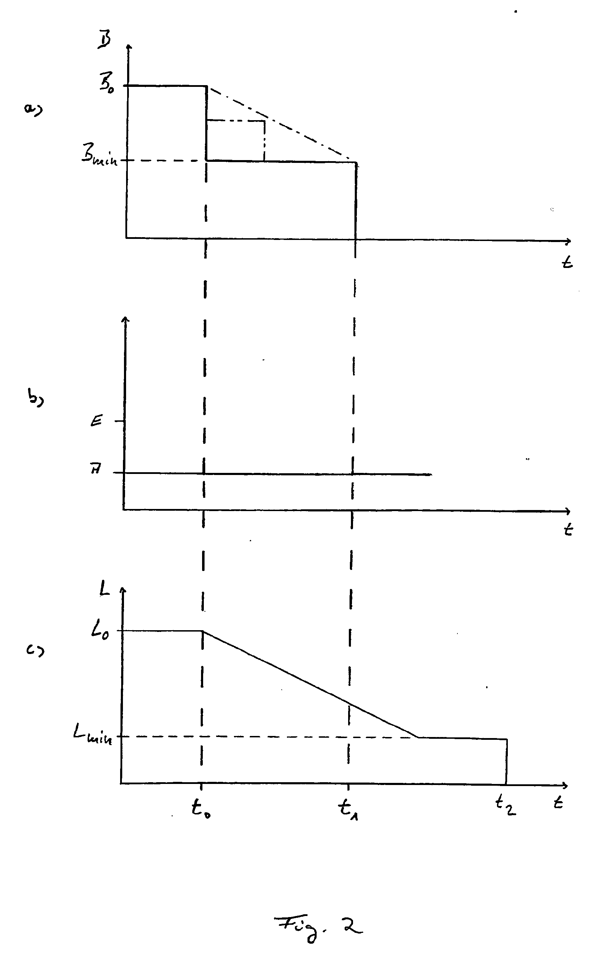

Ebenso wie beim Starten des Betriebs des Fahrzeugheizgerätes 10 und während des Verbrennungsbetriebs ist beim Beenden des Verbrennungsbetriebs darauf zu achten, dass der Schadstoffausstoß in gewissen Grenzen bleibt und dass die Bildung von Ablagerungen im Bereich des Brennkammergehäuses 12 so weit als möglich unterdrückt wird. Um dies sicherzustellen, ist gemäß der vorliegenden Erfindung eine Abschaltprozedur vorgesehen, wie sie nachfolgend mit Bezug auf die Fig. 2 beschrieben wird. In dieser Fig. 2 veranschaulichen die drei Diagramme a), b) und c) Betriebsparameter des Fahrzeugheizgerätes im Verlaufe des Abschaltens desselben. So veranschaulicht das Diagramm a) über die Zeit hinweg die zugeführte Brennstoffmenge, wobei als Brennstoffmenge hier der Brennstoffstrom, also ein pro Zeiteinheit zugeführtes Volumen, betrachtet wird. Das Diagramm b) veranschaulicht den Betrieb der Heizanordnung 26 und davon insbesondere eines Glühzündstifts, der an sich in Betrieb gesetzt wird, um die Verbrennung zu starten. Das Diagramm c) zeigt die Verbrennungsluftzuführmenge während der Abschaltprozedur, wobei auch hier als Menge ein Volumenstrom betrachtet wird.

Es sei nun angenommen, dass vor dem Zeitpunkt t₀ der normale Verbrennungsbetrieb stattfindet. Es wird also Brennstoff mit einer Brennstoffzuführmenge B₀ eingespeist, während in Zuordnung zu dieser Brennstoffzuführmenge B₀ eine entsprechende Verbrennungsluftzuführmenge Lo zugeführt wird. Zum Zeitpunkt t₀ wird nunmehr ein Abschaltbefehl generiert, beispielsweise im Ansteuergerät 24 selbst oder durch Betätigung eines entsprechenden Schalters. Erfindungsgemäß wird zu diesem Zeitpunkt t₀ eine erste Abschaltphase gestartet, in welcher nicht sofort alle relevanten Parameter auf Werte gesetzt werden, die bei einem völlig deaktivierten Fahrzeugheizgerät 10 vorliegen. Man erkennt beispielsweise im Diagramm a), dass die Brennstoffzuführmenge B in dieser ersten Abschaltphase lediglich verringert wird, und zwar beispielsweise auf einen Wert Bₘᵢₙ. Dieser Wert Bₘᵢₙ kann beispielsweise die minimal mögliche Brennstoffzuführmenge sein, welche der minimalen Heizleistung des Fahrzeugheizgerätes 10 zugeordnet ist. Vor allem dann, wenn als Brennstoffzuführanordnung 16 eine getaktet arbeitende Dosierpumpe eingesetzt wird, ist diese minimale Brennstoffzuführmenge Bₘᵢₙ bestimmt durch die kleinstmögliche Arbeitsfrequenz einer derartigen Pumpe. Man erkennt in diesem Diagramm a) jedoch, dass nicht notwendigerweise sofort mit Beginn der ersten Abschaltphase, also zum Zeitpunkt t₀, die Brennstoffzuführmenge B auf diesen Wert reduziert werden muss. Es ist ebenso ein kontinuierlicher Übergang möglich, wie durch Strich-Punkt-Linie angedeutet, oder eine mehrstufigenartige Veränderung, wie durch die Strich-Zweipunkt-Linie angedeutet.

Gleichzeitig mit dem Beginn der ersten Abschaltphase wird auch begonnen, die Verbrennungsluftzuführmenge L zu reduzieren, wobei hier eine kontinuierliche ebenso wie eine stufenartige Verringerung vorgesehen sein kann. Das Ziel ist, das Verhältnis von Verbrennungsluft und Brennstoffdampf in einem Bereich zu halten, der eine sichere und möglichst schadstoffarme Verbrennung erzeugt. Eine zu starke Abmagerung des Verbrennungsgemisches soll vermieden werden.

Weiterhin erkennt man anhand des Diagramms b), dass auch während dieser Abschaltphase die Heizanordnung 26 nicht aktiviert wird. Zwar wird durch Aktivieren der Heizanordnung 26, also eines Glühzündstiftes oder/und einer einem Verdampfermedium zugeordneten Heizeinrichtung, verstärkt Brennstoffdampf generiert bzw. noch vorhandener Brennstoff ausgetrieben. Es hat sich jedoch gezeigt, dass bei einer Verringerung der Heizleistung durch Verringerung der Brennstoffzuführmenge und der Verbrennungsluftzuführmenge die Verbrennung sich primär auf denjenigen Bereich konzentrieren wird, in welchem der Brennstoff eingespeist wird. Vor allem dann, wenn eine Brennstoffeinspeisung in einem Bereich nahe einem Glühzündstift erfolgt, wird also die Verbrennung dann auch verstärkt in diesem Bereich auftreten, was dazu führt, dass lokal Temperaturen entstehen, die höher sind, als bei stärkerer, jedoch gleichmäßiger über die ganze Brennkammer 14 verteilter Verbrennung. Das zusätzliche Aktivieren der Heizanordnung 26, also beispielsweise eines Glühzündstifts, würde zu einer weiteren Temperaturerhöhung in diesem lokal begrenzten Bereich führen. Dabei könnte das Problem entstehen, dass die Siedetemperatur des eingesetzten Brennstoffs erreicht oder überschritten wird. Das Sieden von Brennstoff führt jedoch im Allgemeinen zu einer sehr starken Ablagerungsbildung, die über die Betriebslebensdauer hinweg zum Funktionsausfall oder zumindest einer erheblichen Funktionsbeeinträchtigung führen kann. Da jedoch erfindungsgemäß auch während der Abschaltprozedur die Heizanordnung 26 außer Betrieb bleibt, wird die Gefahr einer lokalen Überhitzung und des Siedens von Brennstoff vermieden. In Folge dessen ist auch die Gefahr der Erzeugung von Ablagerungen im Bereich der Brennkammer praktisch eliminiert. Weiterhin hat sich gezeigt, dass bei einer derartigen Abschaltprozedur, also bei Verringerung der Heizleistung des Fahrzeugheizgerätes 10 und weiterhin deaktivierter Heizanordnung 26, ein um 20% bis 40% verminderter Schadstoffausstoß vorhanden ist, insbesondere die CO-Emission kann gesenkt werden.

Am Ende der ersten Abschaltphase, also beispielsweise zu einem Zeitpunkt t₁, wird dann der Verbrennungsbetrieb beendet, und zwar dadurch, dass die Brennstoffzuführmenge B auf einen Wert Null reduziert wird. Auch dies kann wieder spontan, wie im Diagramm a) gezeigt, in mehreren Stufen oder kontinuierlich erfolgen. Unterschreitet die Brennstoffzuführmenge einen bestimmten Grenzwert, erlischt die Flamme. Weiterhin wird jedoch auch nach dem Ende der ersten Abschaltphase in einer auf den Zeitpunkt t₁ folgenden zweiten Abschaltphase Verbrennungsluft zugeführt, wenn auch mit deutlich verminderter Menge. Hier kann beispielsweise dafür gesorgt werden, dass in dieser zweiten Abschaltphase eine minimale Verbrennungsluftzuführmenge Lₘᵢₙ nicht unterschritten wird. Auf diese Art und Weise wird dafür gesorgt, dass die Brennkammer bzw. alle stromabwärts davon liegenden Systembereiche ausgespült werden und sich keine Rückstände niederschlagen können. Zum Zeitpunkt t₂ wird auch diese zweite Abschaltphase durch Einstellen der Verbrennungsluftzufuhr beendet. Auch hier kann die Gebläsedrehzahl spontan, stufenartig oder kontinuierlich auf Null verringert werden. Auch in der zweiten Abschaltphase wird die Heizeinrichtung nicht aktiviert.

Durch die vorliegende Erfindung wird dafür gesorgt, dass durch das definierte Aufrechterhalten des Brennstoffzuführbetriebs und des Verbrennungsluftzuführbetriebs auch während der Abschaltphase bei verringerter Schadstoffemission die Gefahr der Bildung von Ablagerungen im Bereich der Brennkammer deutlich vermindert wird. Es ist selbstverständlich, dass gewisse Variationen vorgenommen werden können. So muss die Brennstoffzuführmenge bzw. die Heizleistung des Fahrzeugheizgerätes nicht notwendigerweise auf den minimalen Wert gesenkt werden. Es ist selbstverständlich möglich, hier auch in einem mittleren Bereich der Heizleistung zu arbeiten. Auch ist es selbstverständlich möglich, dass die erfindungsgemäße Abschaltprozedur bei Fahrzeugheizgeräten eingesetzt werden kann, die anders aufgebaut sind, als das vorangehend mit Bezug auf die Fig. 1 beispielhaft beschriebene.

## Patentansprüche

1. Verfahren zum Beenden des Heizbetriebs eines Fahrzeugheizgerätes (10), welches Fahrzeugheizgerät (10) eine Brennkammer (14), eine Brennstoffzuführanordnung (16) zum Zuführen einer einstellbaren Brennstoffzuführmenge zu der Brennkammer (14), eine Verbrennungsluftzuführanordnung (20) zum Zuführen einer einstellbaren Verbrennungsluftzuführmenge zu der Brennkammer (14) sowie eine Heizanordnung (26) zum wenigstens lokalen Erwärmen der Brennkammer (14) aufweist, wobei das Verfahren die folgenden Maßnahmen umfasst:
- Erzeugen eines Abschaltbefehls,
- in einer ersten Abschaltphase nach Erzeugung des Abschaltbefehls, Zuführen von Brennstoff zu der Brennkammer (14) und Betreiben der Verbrennungsluftzuführanordnung (20) derart, dass die Heizleistung des Fahrzeugheizgerätes in der ersten Abschaltphase im Vergleich zu einer maximalen Heizleistung des Fahrzeugheizgerätes verringert ist,
- Nicht-Betreiben der Heizanordnung (26) in der ersten Abschaltphase, wobei das Fahrzeugheizgerät in der ersten Abschaltphase mit einer Heizleistung betrieben wird, die im Bereich der minimalen Heizleistung des Fahrzeugheizgerätes liegt, wobei am Ende der ersten Abschaltphase die Brennstoffzufuhr zu der Brennkammer (14) beendet wird, und wobei in einer an die erste Abschaltphase anschließenden zweiten Abschaltphase die Verbrennungsluftzuführanordnung (20) zum Zuführen von Verbrennungsluft zu der Brennkammer (14) derart betrieben wird, dass mit Beginn der zweiten Abschaltphase die zugeführte Verbrennungsluftmenge kontinuierlich oder stufenartig verringert wird und eine minimale Verbrennungsluftmenge (Lₘᵢₙ) nicht unterschritten wird, wobei in der zweiten Abschaltphase die Heizanordnung nicht betrieben wird.

2. Verfahren nach Anspruch 1,
**dadurch gekennzeichnet, dass** in der ersten Abschaltphase die Brennstoffzufuhr mit einer Brennstoffzuführmenge (B) im Bereich einer minimalen Brennstoffzuführmenge (Bₘᵢₙ) erfolgt.

## Claims

1. A procedure for stopping the heating operation of a vehicle heating device (10), said vehicle heating device (10) comprising a combustion chamber (14), a fuel supply arrangement (16) for supplying an adjustable fuel supply volume to the combustion chamber (14), a combustion air supply arrangement (20) for supplying an adjustable combustion air supply volume to said combustion chamber (14) as well as a heating arrangement (26) for at least locally heating said combustion chamber (14), the procedure comprising the following measures:
- generating a switch-off command,
- during a first turn down phase after generating the switch-off command supplying fuel to said combustion chamber (14) and operating said combustion air supply arrangement (20) so that the heating output of said vehicle heating device is, during the first turn down phase, reduced in comparison to a maximum output of said vehicle heating device,
- not operating the heating arrangement (26) during the first turn down phase, the vehicle heating device being during the first turn down phase operated with a heating output in the range of the minimum heating output of said vehicle heating device, the fuel supply to the combustion chamber (14) being stopped at the end of the first switch-off phase, and said combustion air supply arrangement (20) for supplying combustion air to said combustion chamber (14) being, during a second turn down phase following the first turn down phase, operated such that with the beginning of the second turn down phase the supplied combustion air volume is continuously or step-wise reduced and does not fall below a minimum combustion air volume (Lₘᵢₙ), said heating arrangement not being operated during said second turn down phase.

2. The procedure according to claim 1,
**characterised in that** during the first turn down phase said fuel supply occurs with a fuel supply volume (B) in the range of a minimum fuel supply volume (Bₘᵢₙ).

## Revendications

1. Une méthode pour terminer l'opération de chauffage d'un dispositif de chauffage de véhicule (10), le dispositif de chauffage de véhicule (10) comprenant une chambre de combustion (14), un arrangement d'alimentation en combustible (16) pour insérer une quantité ajustable de combustible dans la chambre de combustion (14), un arrangement d'alimentation en air de combustion (20) pour insérer une quantité ajustable d'air de combustion dans la chambre de combustion (14) ainsi qu'un arrangement de chauffage (26) pour chauffer au moins localement la chambre de combustion (14), la méthode comprenant les mesures suivantes :
- générer une commande de coupure,
- dans une première phase de coupure après la génération de la commande de coupure, insérer du combustible dans la chambre de combustion (14) et opérer l'arrangement d'alimentation en air de combustion (20) de sorte que la performance de chauffage du dispositif de chauffage de véhicule dans la première phase de coupure soit réduite comparée à une performance maximale du dispositif de chauffage de véhicule,
- ne pas opérer l'arrangement de chauffage (26) dans la première phase de coupure, le dispositif de chauffage de véhicule étant, dans la première phase de coupure, opéré avec une performance de chauffage dans l'étendue de la performance minimale du dispositif de chauffage de véhicule, l'insertion de combustible dans la chambre de combustion (14) étant terminée à la fin de la première phase de coupure, et l'arrangement d'alimentation en air de combustion (20) pour insérer de l'air de combustion dans la chambre de combustion (14) étant, dans une seconde phase de coupure suivant la première phase de coupure, opéré de sorte qu'au début de la seconde phase de coupure la quantité d'air de combustion insérée soit réduite d'une façon continue ou par étapes et de sorte que la quantité d'air de combustion (Lₘᵢₙ) ne soit pas inférieur à une valeur minimale, l'arrangement de chauffage n'étant pas opéré dans la deuxième phase de coupure.

2. La méthode selon la revendication 1,
**caractérisée par** l'alimentation en combustible étant réalisée, dans la première phase de coupure, par une quantité de combustible insérée (B) correspondant à une quantité minimale de combustible insérée (Bₘᵢₙ).
